# FASCICULE DE BREVET EUROPEEN

(11) **EP 3 277 937 B1**
(45) Date de publication et mention de la délivrance du brevet: **28.08.2019**
(21) Numéro de dépôt: 16717189.1
(22) Date de dépôt: 31.03.2016
(51) Int. Cl.: F02C 7/06, F02C 7/14, F01D 9/04

(54) **TURBOMACHINE EQUIPEE D'UN SECTEUR D'AUBAGE ET D'UN CIRCUIT DE REFROIDISSEMENT.**
TURBINENMOTOR MIT EINEM BESCHAUFELTEN ABSCHNITT UND EINEM KÜHLKREISLAUF
TURBINE ENGINE PROVIDED WITH A BLADED SECTOR AND A COOLING CIRCUIT

(30) Priorité: 01.04.2015 FR 1552802
(43) Date de publication de la demande: 07.02.2018
(73) Titulaire: SAFRAN AIRCRAFT ENGINES, 75015 Paris (FR)
(72) Inventeur: CHALAUD, Sébastien, 77550 Moissy-Cramayel Cedex (FR); VESSOT, Christian, 77550 Moissy-Cramayel Cedex (FR)
(74) Mandataire: Cabinet Beau de Loménie
(86) Numéro de dépôt international: PCT/FR2016/050728
(87) Numéro de publication internationale: WO 2016/156743

(56) Documents cités:
- EP-A1- 0 743 435
- EP-A2- 1 630 358
- EP-A2- 1 884 625
- US-A- 2 474 258
- US-A- 4 645 415

## Description

### DOMAINE DE L'INVENTION

La présente invention se rapporte au domaine des turbomachines équipées de circuit de refroidissement, notamment, mais pas uniquement, pour refroidir de l'huile de la turbomachine. En particulier, l'invention concerne les circuits de refroidissement où un échange de chaleur est réalisé en tout ou partie dans des aubages de stator de turbomachines.

Le terme « turbomachine » désigne l'ensemble des appareils à turbine à gaz produisant une énergie motrice, parmi lesquels on distingue notamment les turboréacteurs fournissant une poussée nécessaire à la propulsion par réaction à l'éjection à grande vitesse de gaz chauds, et les turbomoteurs dans lesquels l'énergie motrice est fournie par la rotation d'un arbre moteur. Par exemple, des turbomoteurs sont utilisés comme moteur pour des hélicoptères, des navires, des trains, ou encore comme moteur industriel. Les turbopropulseurs (turbomoteur entrainant une hélice) sont également des turbomoteurs utilisés comme moteur d'avion.

### ETAT DE LA TECHNIQUE ANTERIEURE

Le circuit d'huile d'un moteur d'avion assure la double tâche de lubrifier les parties tournantes du moteur et d'évacuer la chaleur libérée dans le moteur. Pour refroidir l'huile, dont la température ne doit généralement pas dépasser une température prédéterminée pour des raisons d'efficacité, différents types d'échangeur de chaleur existent.

Certains échangeurs de chaleur utilisent l'air comme source froide. Par exemple, le document de brevet WO 2013150248 A1 décrit une aube de stator d'une turbomachine formée par plusieurs parties agencées les unes par rapport aux autres pour définir des passages d'écoulement d'air entre ces parties. De l'huile à refroidir circule dans des canaux ménagés dans les différentes parties de l'aube. Bien que satisfaisante, cette solution est relativement complexe.

Par ailleurs, pour optimiser les circuits de refroidissements connus, on cherche notamment, mais pas uniquement, à réduire les pertes de charges dans le circuit d'huile.

US2474258 divulgue un appareil de turbine.

### PRESENTATION DE L'INVENTION

Le présent exposé concerne une turbomachine selon la revendication 1 comprenant au moins un secteur d'aubage de stator et un circuit de distribution de fluide, le secteur d'aubage de stator comprenant au moins une aube, une entrée de fluide, une sortie de fluide et un canal reliant fluidiquement l'entrée de fluide et la sortie de fluide en s'étendant au moins en partie dans l'aube, l'aube et le canal étant adaptés pour permettre, lorsque la turbomachine fonctionne, un échange thermique entre un fluide chaud traversant le canal et un flux d'air froid traversant le secteur d'aubage de stator, le circuit de distribution de fluide présentant au moins une conduite d'alimentation et au moins une conduite de récupération distincte de la conduite d'alimentation, l'entrée de fluide étant reliée fluidiquement à un piquage de dérivation de la conduite d'alimentation tandis que la sortie de fluide est reliée fluidiquement à un piquage de dérivation de la conduite de récupération.

Le fluide chaud à refroidir est par exemple de l'huile. Dans ce cas, la conduite d'alimentation peut être reliée à une pompe d'un circuit de lubrification de la turbomachine, laquelle pompe est prévue pour refouler vers la conduite d'alimentation l'huile chaude collectée après lubrification des parties tournantes du moteur. La conduite de récupération peut être reliée à un réservoir du circuit de lubrification, pour renvoyer vers ce réservoir l'huile refroidie par son passage dans au moins un secteur d'aubage de stator.

Par "secteur d'aubage de stator", on entend désigner une partie de l'aubage du stator d'une turbomachine. Cette partie comprend un certain nombre d'aubes et est par exemple délimitée, intérieurement et extérieurement, par des plateaux (également appelés plateformes, ou parois) s'étendant suivant la direction circonférentielle de l'aubage et reliant les extrémités (internes/externes) des aubes entre elles, mais pas nécessairement. Le nombre d'aubes d'un secteur d'aubage est supérieur ou égal à un et inférieur ou égal au nombre total d'aubes de l'aubage.

De manière générale, dans le présent exposé, la direction axiale correspond à la direction de l'axe de rotation du rotor de la turbomachine, et une direction radiale est une direction perpendiculaire à cet axe. De même, un plan axial est un plan contenant l'axe de rotation du rotor, et un plan radial est un plan perpendiculaire à cet axe. La direction circonférentielle correspond à la direction de la circonférence de l'aubage de stator de la turbomachine.

Par ailleurs, sauf précision contraire, les adjectifs "interne" et "externe" ou "intérieur" et "extérieur" sont utilisés en référence à une direction radiale de sorte que la partie intérieure (i.e. radialement intérieure) d'un élément est plus proche de l'axe de rotation que la partie extérieure (i.e. radialement extérieure) du même élément.

Enfin, sauf indication contraire l'amont et l'aval sont définis par rapport au sens d'écoulement normal du fluide (de l'amont vers l'aval) entre les aubes du stator.

On comprend que la turbomachine comprend un ou plusieurs secteurs d'aubage de stator (ci-après, et sauf indication contraire « secteur d'aubage »), que chaque secteur d'aubage comprend une ou plusieurs aubes. Un ou plusieurs de ces secteurs d'aubage comprennent chacun au moins une entrée de fluide (ci-après, et sauf indication contraire, « entrée »), au moins une sortie de fluide (ci-après, et sauf indication contraire, « sortie ») et au moins un canal. Dans chaque secteur d'aubage équipé d'un canal, le canal s'étend au moins en partie dans au moins une aube et relie fluidiquement l'entrée et la sortie de chaque secteur d'aubage. Bien entendu, chacun de ces canaux et les aubes contenant un ou plusieurs de ces canaux sont configurés pour pouvoir échanger de la chaleur entre un fluide chaud s'écoulant dans le ou les canaux et un flux d'air froid traversant le ou les secteurs d'aubage de stator.

On comprend que le canal relie l'entrée et la sortie. Bien entendu, il peut y avoir un unique canal qui s'étend entre une ou plusieurs entrées et une ou plusieurs sorties. Inversement, il peut y avoir plusieurs canaux reliés chacun à une unique entrée et/ou à une unique sortie. Selon encore une autre variante, il y a autant d'entrées et de sorties que de canaux. Dans le cas où il y a plusieurs canaux, ces canaux peuvent s'étendre dans une seule aube ou dans plusieurs aubes distinctes. Par exemple, il peut y avoir un unique canal par aube. Bien entendu, chaque canal peut se subdiviser en sous-canaux. Selon un autre exemple, il peut y avoir un seul canal qui s'étend dans plusieurs aubes. Bien sûr, ceci est applicable à pour chaque secteur d'aubage.

Par la suite, et sauf indication contraire, par « le/la » secteur d'aubage / aube / entrée / sortie / canal, on entend « au moins un/une » ou « les » secteurs d'aubage / aubes / entrées / sorties / canaux.

Par ailleurs, les termes « chaud » et « froid » sont à considérer relativement l'un par rapport à l'autre, le fluide étant plus chaud que l'air tandis que l'air est plus froid que le fluide.

Dans ce qui suit, par « air » on entend tout gaz pouvant servir de comburant dans une turbomachine. D'une manière générale, l'échange thermique entre le fluide chaud et le flux d'air froid dépend de la distance entre le premier canal et la surface du plateau léchée par le flux d'air froid, ainsi que de la conduction thermique du matériau constitutif de l'aube. Par exemple, l'aube peut être réalisée dans un métal ou un alliage métallique ayant une bonne conductivité thermique.

On comprend que l'entrée, la sortie et le canal forment un circuit de dérivation par rapport au circuit de distribution de fluide. En d'autres termes, un circuit de dérivation comprend une entrée, une sortie, et le ou les canaux s'étendant entre cette entrée et cette sortie. Bien entendu, dans le cas où un seul canal relie plusieurs entrées à plusieurs sorties, le circuit de dérivation comprend alors l'ensemble de ces entrées et sorties et le canal qui s'étend entre ces entrées et sortie. Ainsi, du fluide chaud circule dans le circuit de distribution, et une partie de ce fluide chaud est dirigé dans l'aube, en dérivation du circuit de distribution. Lorsque l'aubage comprend plusieurs circuits de dérivation, chaque secteur d'aubage pouvant comprendre un ou plusieurs circuits de dérivation, chacun de ces circuits de dérivation conduit une partie du fluide chaud vers une ou plusieurs aubes pour refroidir le fluide chaud. Une telle structure permet de refroidir efficacement le fluide chaud tout en minimisant les pertes de charge dans l'ensemble du circuit de refroidissement, le circuit de refroidissement comprenant le circuit de distribution et le ou les circuits de dérivation. De plus, par rapport à un circuit de refroidissement en série, les circuits en dérivation permettent de maximiser l'écart de température entre le fluide chaud et l'air froid, de sorte que le refroidissement dans chaque canal est maximisé. Par ailleurs, dans le cas où il y a plusieurs circuits de dérivation, en cas de défaillance d'un circuit de dérivation, par exemple en cas de rupture d'une aube, le refroidissement du fluide chaud reste assuré au moins en partie par les autres circuits de dérivations.

Le secteur d'aubage de stator comprend un plateau interne relié à l'extrémité interne de l'aube et un plateau externe relié à l'extrémité externe de l'aube, l'entrée de fluide et la sortie de fluide étant toutes les deux ménagées dans un plateau parmi le plateau interne et le plateau externe tandis que le canal s'étend en partie dans l'autre plateau parmi le plateau interne et le plateau externe.

On comprend donc que par rapport à l'aube, l'entrée et la sortie sont disposées d'un seul et même côté, dans un même plateau, tandis que le canal s'étend dans l'aube et dans le plateau opposé. Bien entendu, ce dernier plateau et le canal sont adaptés pour permettre, lorsque la turbomachine fonctionne, un échange thermique entre un fluide chaud traversant le canal et un flux d'air froid traversant le secteur d'aubage de stator. Une telle structure permet d'améliorer le refroidissement du fluide s'écoulant dans le canal, puisque dans ce cas les surfaces d'échange thermique se situent non seulement au niveau de l'aube mais également au niveau du plateau interne et/ou du plateau externe.

La disposition de l'entrée et de la sortie d'un circuit de dérivation d'un même côté d'un plateau, et du même côté que le circuit de distribution de fluide par rapport à la veine d'air qui traverse le secteur d'aubage de stator, peut être avantageuse notamment dans le cas où le circuit de distribution de fluide est relié à un circuit de lubrification de la turbomachine disposé du même côté par rapport à la veine d'air. En effet, les liaisons fluidiques entre lesdites entrées et sorties et le circuit de distribution de fluide, de même que les liaisons fluidiques entre ledit circuit de distribution et le circuit de lubrification, n'ont dans ce cas pas besoin de traverser la veine d'air. Il n'est cependant pas exclu, sans sortir du cadre de l'invention, de prévoir qu'au moins une telle liaison fluidique traverse la veine d'air, par exemple en passant par un bras de servitude séparé des secteurs d'aubage.

Dans certains modes de réalisation, le canal s'étend, depuis l'entrée de fluide, radialement dans une première aube, circonférentiellement dans un plateau sur toute l'étendue circonférentielle du secteur d'aubage, puis de nouveau radialement dans la première aube vers la sortie de fluide.

On comprend donc que le canal forme une boucle entre l'entrée et la sortie, cette boucle présentant un passage « aller » et un passage « retour » dans une seule et même aube , à savoir la première aube, et s'étend sur toute l'étendue circonférentielle du plateau opposé au plateau où sont ménagées l'entrée et la sortie. Bien entendu, dans le cas où le secteur d'aubage comprend plusieurs aubes, le canal peut également s'étendre radialement dans une ou plusieurs des aubes autres que la première aube. Une telle configuration permet d'optimiser les surfaces d'échange thermique ainsi qu'un équilibrage des températures au sein du secteur d'aubage grâce à la proximité des passes « aller » et des passes « retour ».

Dans certains modes de réalisation, le secteur d'aubage de stator comprend plusieurs aubes, le canal s'étend, depuis l'entrée de fluide, radialement dans une première aube, circonférentiellement dans un plateau sur toute l'étendue circonférentielle inter-aube, puis de nouveau radialement dans la première aube vers la sortie de fluide.

On comprend donc que le canal forme une boucle entre l'entrée et la sortie, cette boucle présentant un passage « aller » et un passage « retour » dans une seule et même aube , à savoir la première aube, et s'étend sur toute l'étendue circonférentielle du plateau opposé au plateau où sont ménagées l'entrée et la sortie, entre la première aube et une deuxième aube adjacente à la première aube (i.e. étendue inter-aube). Bien entendu, on peut prévoir un tel canal, associé à une entrée de fluide et une sortie de fluide, pour chaque aube du secteur d'aubage. Une telle configuration permet d'optimiser les surfaces d'échange thermique ainsi qu'un équilibrage des températures au sein du secteur d'aubage grâce à la proximité des passes « aller » et des passes « retour ». Par ailleurs, on assure une très grande sécurité du circuit de refroidissement en cas de fuite : on peut isoler un canal fuyard, par exemple en fermant des vannes d'isolement disposées sur l'entrée de fluide et la sortie de fluide associées au canal, tout en conservant une grande capacité de refroidissement grâce aux autres canaux intègres.

Dans certains modes de réalisation, l'entrée de fluide et la sortie de fluide sont ménagées dans le plateau interne. Ceci permet de simplifier la structure générale du circuit de refroidissement lorsqu'il est appliqué, par exemple, au refroidissement d'huile de la turbomachine, les dispositifs de la turbomachine utilisant de l'huile étant généralement disposés radialement plus à l'intérieur que le secteur d'aubage.

Dans certains modes de réalisation, le secteur d'aubage de stator comprend plusieurs aubes, le canal s'étendant dans au moins deux des aubes. Selon une variante, le secteur d'aubage de stator comprend un plateau interne relié à l'extrémité interne de chacune des aubes et un plateau externe relié à l'extrémité externe de chacune des aubes, le canal s'étendant dans le plateau interne et dans le plateau externe.

Des telles configurations utilisant à la fois le plateau interne et le plateau externe pour intégrer le canal de refroidissement permettent d'améliorer encore l'échange thermique entre le fluide chaud et l'air froid lors du passage du fluide chaud dans le canal. En effet, la quasi-totalité de la surface d'un secteur d'aubage de stator léchée par l'air froid traversant l'aubage de stator peut être utilisée comme surface d'échange thermique.

Dans certains modes de réalisation, le canal présente le même nombre de passages dans chacune des aubes, chaque passage pouvant être formé par un sous-canal, ou une passe dudit canal. Dans certains modes de réalisations, le canal s'étend selon une même longueur linéaire dans chacune des aubes. Bien entendu, la longueur linéaire du canal dans une aube correspond à la somme des longueurs de chacun des passages. De telles structures permettent, seules ou en combinaison, de réduire les écarts de température entre chaque aube.

Dans certains modes de réalisation, le secteur d'aubage comprend plusieurs aubes, au moins deux aubes comprenant chacune un canal, les aubes et canaux étant adaptés pour permettre, lorsque la turbomachine fonctionne, un échange thermique entre un fluide chaud traversant le canal et un flux d'air froid traversant le secteur d'aubage de stator, le canal d'une aube étant distinct du canal de l'autre aube, le secteur d'aubage comprenant autant d'entrées de fluide et de sorties de fluide que de canaux, chaque canal étant respectivement relié fluidiquement à une entrée de fluide et une sortie de fluide distinctes de l'entrée de fluide et de la sortie de fluide de l'autre canal.

En d'autres termes, on comprend qu'un premier canal s'étend dans une première aube et qu'un deuxième canal s'étend dans une deuxième aube. Selon une variante, un troisième canal s'étend dans une troisième aube, etc. Chaque canal est indépendant des autres canaux, l'entrée et la sortie de chaque canal étant différentes des entrées et sorties des autres canaux. Bien entendu chaque canal peut présenter une unique ou plusieurs entrées et une unique ou plusieurs sorties. Chaque canal et l'aube dans lequel il est ménagé sont adaptés pour permettre, lorsque la turbomachine fonctionne, un échange thermique entre un fluide chaud traversant le canal et un flux d'air froid traversant le secteur d'aubage de stator. Bien entendu, un autre canal, distinct des premier, deuxième, etc. canaux, peut s'étendre dans une ou plusieurs aubes, par exemple dans la première aube et dans la deuxième aube, ou bien dans des aubes distinctes.

On comprend également que chaque entrée/sortie est respectivement reliée à un piquage de dérivation de la conduite d'alimentation/récupération. Par exemple, les conduites d'alimentation/récupération comprennent respectivement autant de piquage de dérivation que le secteur d'aubage comprend d'entrée/sortie.

Selon une variante, chaque aube comprend un canal, chaque canal d'une aube étant distinct des canaux des autres aubes, le secteur d'aubage comprenant autant d'entrées de fluide et de sorties de fluide que de canaux, chaque canal étant respectivement relié fluidiquement à une entrée et une sortie distinctes de l'entrée et de la sortie de l'autre canal.

Bien entendu, s'il y a plusieurs secteurs d'aubages les configurations ci-dessus peuvent s'appliquer à chacun des secteurs d'aubages. Par exemple, selon une variante, chaque aube de chaque secteur d'aubage comprend un canal reliée fluidiquement à une entrée et une sortie tels que décrit ci-avant.

Une telle structure permet de former autant de circuits de dérivation que le ou les secteurs d'aubages a/ont d'aubes.

De telles configurations permettent de former un grand nombre de circuits de dérivation indépendants, grâce à quoi on améliore le refroidissement du fluide chaud sans pour autant augmenter la perte de charge au sein du circuit de refroidissement.

Dans certains modes de réalisation, la turbomachine comprend au moins deux secteurs d'aubage de stator, chaque secteur d'aubage de stator comprenant au moins une aube, une entrée de fluide, une sortie de fluide et un canal reliant fluidiquement l'entrée de fluide et la sortie de fluide en s'étendant au moins en partie dans l'aube, l'aube et le canal de chacun des secteurs d'aubage étant adaptés pour permettre, lorsque la turbomachine fonctionne, un échange thermique entre un fluide chaud traversant chaque canal et un flux d'air froid traversant le secteur d'aubage de stator, l'entrée de fluide de chaque secteur d'aubage de stator étant reliée fluidiquement à un piquage de dérivation de la conduite d'alimentation tandis que la sortie de fluide de chaque secteur d'aubage de stator est reliée fluidiquement à un piquage de dérivation de la conduite de récupération.

On comprend qu'il y a au moins autant de circuits de dérivation que de secteurs d'aubage, chaque secteur d'aubage comprenant au moins un circuit de dérivation. Bien entendu, chaque secteur d'aubage peut comprendre une seule ou plusieurs aubes tandis que chaque circuit de dérivation peut s'étendre uniquement dans une aube ou dans plusieurs aubes, dans un ou dans les deux plateaux éventuels du secteur d'aubage en question, etc.

De telles configurations permettent de former un grand nombre de circuits de dérivation indépendants, grâce à quoi on améliore le refroidissement du fluide chaud sans pour autant augmenter la perte de charge au sein du circuit de refroidissement.

Dans certains modes de réalisation, la conduite d'alimentation forme une première conduite d'alimentation tandis que le canal, l'entrée de fluide et la sortie de fluide forment respectivement un premier canal, une première entrée de fluide et une première sortie de fluide, le circuit de distribution comprenant une deuxième conduite d'alimentation, le sens de circulation du fluide dans la première conduite d'alimentation étant opposé au sens de circulation du fluide dans la deuxième conduite d'alimentation tandis que le secteur d'aubage de stator comprend une deuxième entrée de fluide, une deuxième sortie de fluide et un deuxième canal reliant fluidiquement la deuxième entrée de fluide et la deuxième sortie de fluide en s'étendant au moins en partie dans l'aube, l'aube et le deuxième canal étant adaptés pour permettre, lorsque la turbomachine fonctionne, un échange thermique entre un fluide chaud traversant le deuxième canal et un flux d'air froid traversant le secteur d'aubage de stator, la deuxième entrée de fluide étant reliée fluidiquement à un piquage de dérivation de la deuxième conduite d'alimentation tandis que la deuxième sortie de fluide est reliée fluidiquement à un piquage de dérivation de la conduite de récupération.

Selon une variante, la conduite de récupération forme une première conduite de récupération tandis que le circuit de distribution comprend une deuxième conduite de récupération, le sens de circulation du fluide dans la première conduite de récupération étant opposé au sens de circulation du fluide au sein de la deuxième conduite de récupération, la première sortie étant reliée fluidiquement à un piquage de dérivation de la première conduite de récupération tandis que la deuxième sortie est reliée fluidiquement à un piquage de dérivation de la deuxième conduite de récupération. Bien entendu, le circuit de distribution peut avoir une unique conduite d'alimentation et deux conduites de récupération, deux conduites d'alimentation et une unique conduite de récupération, ou encore deux conduites d'alimentation et deux conduites de récupération.

Par exemple, les conduites d'alimentation s'étendent circonférentiellement tandis que les sens d'écoulement du fluide au sein des conduites d'alimentation sont opposés selon la direction circonférentielle. De telles configurations permettent d'homogénéiser la température globale des composants le long des conduites d'alimentation/ récupération, et donc de réduire les contraintes mécaniques résultant des différences locales de température.

Dans certains modes de réalisation, le secteur d'aubage de stator comprend un plateau interne relié à l'extrémité interne de l'aube et un plateau externe relié à l'extrémité externe de l'aube, le circuit de distribution de fluide étant au moins en partie ménagé dans un plateau parmi le plateau interne et le plateau externe.

Ceci permet de refroidir le fluide chaud lors de son écoulement dans la partie du circuit de distribution ménagée dans le plateau.

Dans certains modes de réalisation, le piquage de dérivation de la conduite d'alimentation et/ou le piquage de dérivation de la conduite de récupération est/sont équipé(s) d'une vanne d'isolement.

Bien entendu lorsqu'un secteur d'aubage présente plusieurs entrées/sorties, il peut y avoir une vanne par entrée et une vanne par sortie, ou bien un collecteur d'entrée peut être disposé en amont selon l'écoulement du fluide de l'entrée et un autre collecteur disposé en aval de la sortie (l'amont et l'aval étant considérés selon le sens d'écoulement du fluide dans le canal), une seule vanne d'isolement étant disposée à l'entrée du collecteur d'entrée et/ou à la sortie du collecteur de sortie. Ainsi, il est possible d'isoler fluidiquement respectivement tout ou partie du secteur d'aubage, ou uniquement l'intégralité du secteur d'aubage. Ceci permet par exemple de limiter considérablement la perte du fluide en cas de rupture d'un canal dans un secteur d'aubage.

Dans certains modes de réalisation, le fluide est un liquide, notamment de l'huile.

Dans certains modes de réalisation, le fluide est un fluide caloporteur, le circuit de distribution comprenant un échangeur de chaleur configuré pour échanger de la chaleur entre le fluide caloporteur et un autre fluide, notamment de l'huile.

Dans certains modes de réalisation, les aubes sont des aubes de redressement de sortie ou "OGV" pour "Outlet Guide Vane" en anglais. En particulier, il peut s'agir d'aubes de redressement du flux secondaire d'air disposées dans la veine en sortie de la soufflante dans un turboréacteur à double flux. On appelle plus communément « veine secondaire » une telle veine de passage du flux secondaire d'air.

L'utilisation comme surfaces d'échange de chaleur des surfaces existantes que sont les surfaces des aubes elles-mêmes et éventuellement les surfaces des plateaux interne et/ou externe, présente l'avantage de ne pas augmenter la trainée aérodynamique comparativement à un échangeur de chaleur distinct faisant saillie dans la veine d'air , un tel échangeur de chaleur distinct impliquant une trainée aérodynamique supplémentaire et par conséquent une perte supplémentaire de poussée aérodynamique.

En outre, dans le cas d'un moteur d'avion et lorsque les aubes sont des aubes de redressement de sortie placées dans la veine secondaire, le transfert de chaleur du fluide chaud à l'air représente un apport additionnel d'énergie dans la veine secondaire qui est bénéfique pour les performances du moteur. De plus, cet apport de chaleur s'effectue sur la totalité de l'étendue de la veine dans la direction radiale, appelée par la suite « hauteur radiale de la veine », ce qui rend cette solution plus efficiente thermodynamiquement que la plupart des solutions connues.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente une demi-coupe axiale d'un exemple de turboréacteur d'avion,
- la figure 2 est une représentation simplifiée d'un premier mode de réalisation de secteur d'aubage,
- la figure 3 représente une première variante du premier mode de réalisation,
- la figure 4 représente une deuxième variante du premier mode de réalisation,
- la figure 5 est une représentation simplifiée d'un deuxième mode de réalisation de secteur d'aubage,
- la figure 6 est une représentation simplifiée d'un troisième mode de réalisation de secteur d'aubage,
- la figure 7 est une représentation simplifiée d'un quatrième mode de réalisation de secteur d'aubage, et
- la figure 8 représente une variante du quatrième mode de réalisation.

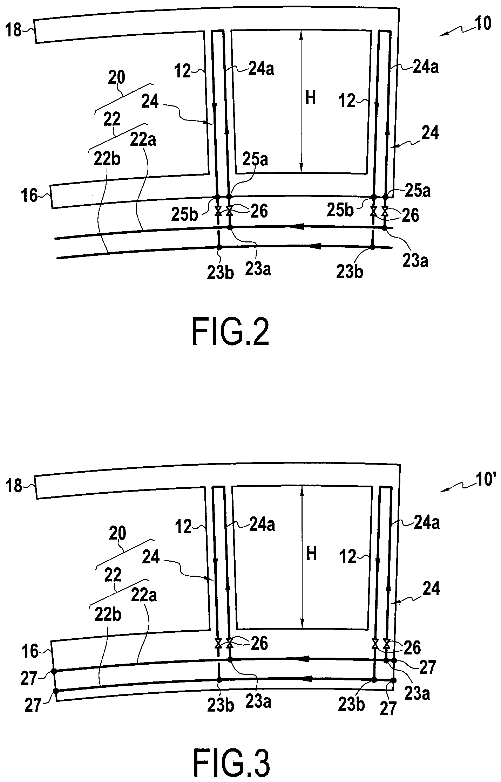

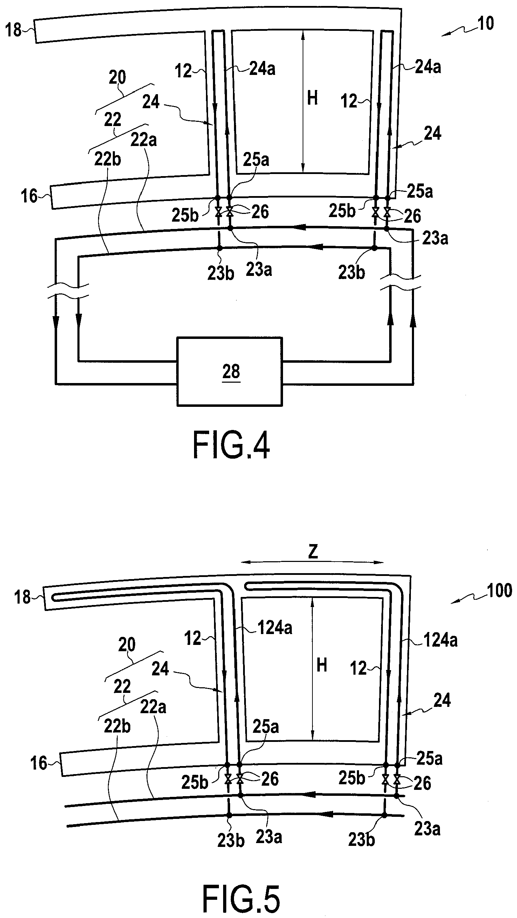

Le premier mode de réalisation et ses variantes décrits en référence aux figures 2, 3 et 4 ne correspondent pas à l'invention revendiquée tandis que les modes de réalisation suivants et leurs variantes décrits en référence au figures 5, 6, 7 et 8 sont des exemples de réalisation de l'invention revendiquée.

### DESCRIPTION DETAILLEE D'EXEMPLES DE REALISATION

Il est précisé que dans un souci de clarté et de concision, les figures sont des représentations très schématiques. L'homme du métier comprendra sans difficulté que l'enseignement du présent exposé s'applique à toutes formes et variantes de secteur d'aubage de stator de turbomachine.

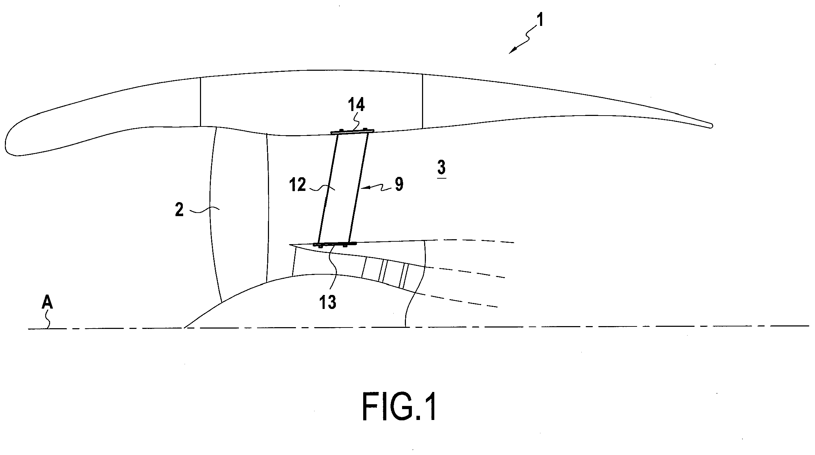

La figure 1 est une demi-coupe axiale de la partie amont d'une turbomachine 1, dans cet exemple un turboréacteur d'avion double-corps double-flux. Un aubage de stator 9 est disposé en aval de la soufflante 2 du turboréacteur 1, dans la veine d'air secondaire 3. L'aubage de stator 9 comprend une paroi interne annulaire 13 et une paroi externe annulaire 14 entre lesquelles s'étendent des aubes 12 de redressement de sortie (ou "OGV"). Ces aubes 12 sont réparties régulièrement autour de l'axe A de rotation du rotor du turboréacteur. Les parois annulaires interne 13 et externe 14 ont une forme générale cylindrique d'axe A.

Dans un mode de réalisation, l'aubage de stator 9 est formé de plusieurs secteurs d'aubage de stator, ou modules, raccordés bout à bout, chaque secteur d'aubage comprenant au moins une aube et s'étendant sur un secteur angulaire de l'aubage. Les secteurs d'aubage peuvent être tous identiques, mais pas nécessairement. Une partie ou la totalité de ces secteurs d'aubage peuvent être utilisés comme échangeurs de chaleur. Les secteurs d'aubage échangeurs de chaleur sont, par exemple, du même type que ceux décrits ci-après.

Dans l'exemple de la figure 2, le module ou secteur d'aubage 10 comprend deux aubes 12 s'étendant radialement entre un plateau interne 16 et un plateau externe 18. Le plateau interne 16 s'étend circonférentiellement entre les extrémités internes des aubes 12 et au-delà d'une de ces extrémités, tandis que le plateau externe 18 s'étend circonférentiellement entre les extrémités externes des aubes 12 et au-delà d'une de ces extrémités, du même côté que le plateau interne 16 et selon une même étendue angulaire dans la direction circonférentielle. Lorsque le secteur d'aubage 10 est intégré à l'aubage de stator 9, les plateaux interne 16 et externe 18 forment chacun une partie des parois annulaires interne 13 et externe 14, respectivement. Le plateau interne 16 peut être fixé sur une paroi annulaire d'un carter de moyeu qui délimite intérieurement une portion de la veine du flux secondaire. Le plateau externe 18 peut être fixé sur une paroi annulaire d'un carter de soufflante qui délimite extérieurement la même portion de la veine du flux secondaire.

Un circuit de refroidissement 20, dans cet exemple pour refroidir de l'huile du turboréacteur en tant que fluide chaud, comprend un circuit de distribution 22 et plusieurs circuits de dérivation 24. Le circuit de distribution 22 comprend une conduite d'alimentation 22a et une conduite de récupération 22b. Dans ce premier mode de réalisation, chaque circuit de dérivation 24 comprend un canal 24a qui s'étend dans une unique aube 12, sur toute la hauteur radiale H de l'aube 12 entre le plateau interne 16 et le plateau externe 18, et relie fluidiquement une entrée de fluide 25a et une sortie de fluide 25b. Dans cet exemple, les entrées de fluide 25a et les sorties de fluide 25b sont toutes ménagées dans un même plateau, à savoir le plateau interne 16. Par entrée 25a ou sortie 25b de fluide ménagée dans un plateau, on entend dans cet exemple que le plateau présente au moins un orifice par lequel le canal 24a débouche du côté opposé à la veine secondaire, cet orifice étant destiné à être relié fluidiquement à la conduite d'alimentation 22a ou à la conduite de récupération 22b. De plus, chaque aube 12 du secteur d'aubage 10 comprend un canal 24a. Ainsi, dans cet exemple, le secteur d'aubage 10 comprend autant de canaux 24a, entrées 25a et sorties 25b (ou autant de circuits de dérivation 24) que d'aubes 12.

Chaque entrée 25a est reliée fluidiquement à un piquage de dérivation 23a de la conduite d'alimentation 22a tandis que chaque sortie 25b est reliée fluidiquement à un piquage de dérivation 23b de la conduite de récupération 22b. Le sens de circulation du fluide dans le circuit de refroidissement 20 est indiqué par les flèches. Chaque piquage 23a et 23b comprend une vanne d'isolement 26. Il est ainsi possible de couper la circulation de l'huile dans un canal 24a, et de l'isoler totalement du circuit de distribution 22.

Le canal 24a ménagé dans chaque aube 12 permet, lorsque le turboréacteur fonctionne, un échange thermique entre l'huile chaude circulant dans ce canal et le flux d'air froid qui enveloppe chacune des aubes 12. De plus, les deux passages du canal 24a dans une aube 12 peuvent être ménagés parallèles l'un à l'autre et suffisamment proches l'un de l'autre pour permettre un échange thermique entre l'huile circulant dans un passage selon un sens de circulation « aller » et l'huile circulant dans l'autre passage selon un sens de circulation « retour » opposé. De cette façon, on parvient à relativement moyenner les températures de l'huile dans les deux passages correspondant à des sens de circulation opposés de l'huile dans un circuit de dérivation 24, ce qui réduit les écarts de température de l'huile dans une même aube. Bien entendu les passages peuvent être rectilignes et/ou curvilignes.

Le secteur d'aubage 10 peut, par exemple, être construit par un procédé de fabrication additive métallique, équivalent à une impression 3-D dans un matériau métallique. Les canaux sont ainsi directement créés lors de la construction du bloc de matière constituant le secteur 10. En alternative, le secteur d'aubage 10 peut être construit en utilisant des techniques de fabrication plus conventionnelles.

Dans cet exemple, le circuit de distribution 22 s'étend circonférentiellement et du côté intérieur par rapport au plateau interne 16. Ainsi, le circuit de distribution 22 est disposé en dehors de l'aubage de stator 9.

Selon une variante représentée sur la figure 3, le circuit de distribution 22 est en partie intégré dans les secteurs d'aubage 10', dans cet exemple dans les plateaux internes 16. Les entrées de fluide et les sorties de fluide des circuits de dérivation 24 coïncident dans cet exemple avec les piquages de dérivation 23a et 23b des conduites d'alimentation et de récupération du circuit de distribution 22. Dans cet exemple, les portions de conduites d'alimentation et de récupération incluses dans un plateau interne 16 comprennent des raccords 27 permettant de les raccorder respectivement aux portions des conduites d'alimentation et de récupération des secteurs d'aubages 10' adjacents. Par ailleurs, un circuit de dérivation 24 peut comprendre des vannes d'isolement 26, lesquelles dans cet exemple peuvent être logées dans l'épaisseur et/ou sur la surface radialement intérieure d'un plateau interne 16.

Selon une autre variante, il est possible d'inclure des portions seulement de la conduite d'alimentation dans le plateau interne 16, tandis que de même que dans le mode de réalisation décrit précédemment en référence à la figure 2, la conduite de récupération reste disposée complètement en dehors de l'aubage de stator et ne nécessite donc pas des raccords 27. En effet, la température du fluide qui circule dans une conduite d'alimentation est généralement plus élevée que celle du fluide qui circule dans une conduite de récupération. L'utilisation des plateaux internes 16 comme surface additionnelle d'échange thermique pour le fluide trouve donc un plus grand intérêt avec le fluide d'une conduite d'alimentation.

Selon encore une autre variante représentée sur la figure 4, le fluide qui circule dans le circuit de refroidissement 20 est un fluide caloporteur qui échange de la chaleur avec de l'huile du turboréacteur 1 dans un échangeur de chaleur 28.

La figure 5 représente un deuxième mode de réalisation de secteur d'aubage 100, similaire au secteur d'aubage 10 du premier mode de réalisation à l'exception du canal de chaque circuit de dérivation. Ainsi, les éléments identiques conservent la même référence numérique tandis que les éléments modifiées voient leur signe de référence incrémenté de « 100 ».

Chaque canal 124a du secteur d'aubage 100 s'étend sur toute la hauteur radiale H des aubes 12 et s'étend dans le plateau externe 18, sur tout ou partie de l'étendue circonférentielle inter-aube Z. Ainsi, dans cet exemple les entrées et sorties 25a et 25b sont ménagées dans un même plateau, à savoir le plateau interne 16, tandis que le canal 124a s'étend dans l'autre plateau, à savoir le plateau externe 18. Plus particulièrement, depuis une entrée de fluide 25a, chaque canal 124a s'étend radialement dans une aube 12, circonférentiellement dans un plateau 16 sur toute l'étendue circonférentielle inter-aube Z, puis de nouveau radialement dans la même aube 12 vers la sortie de fluide 25b.

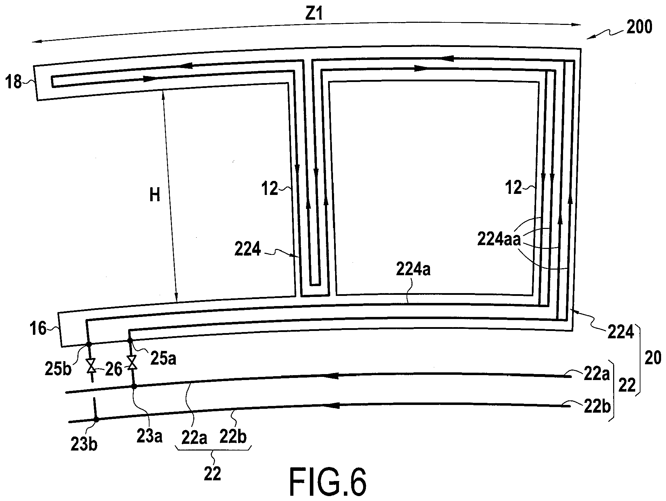

Les entrées et sorties 25a et 25b d'un circuit de dérivation 24 ne sont pas nécessairement disposées dans le prolongement de l'aube 12 dans laquelle s'étend le circuit de dérivation. En variante, il est possible de disposer les entrées et sorties 25a et 25b toujours dans le plateau interne 16 mais au voisinage d'une aube 12 adjacente à celle dans laquelle s'étend le circuit de dérivation. De cette façon, le canal 124a présente une partie qui s'étend dans le plateau interne et se relie avec la partie du même canal qui s'étend dans l'aube. On utilise donc également le plateau interne 16 pour l'échange thermique entre le fluide d'un circuit de dérivation 24 et l'air traversant le secteur d'aubage. Ce principe peut être appliqué à un circuit de dérivation dont le canal s'étend dans plus d'une aube, comme décrit plus loin en référence à la figure 6.

Selon une autre variante, il est possible d'intégrer dans le plateau interne 16 des portions de la conduite d'alimentation du circuit de distribution, voire également des portions de la conduite de récupération, de la même façon qu'indiqué précédemment en référence à la figure 3.

Selon une autre variante sur la base des réalisations susmentionnées de secteur d'aubage en référence à la figure 5, il est possible de scinder le secteur d'aubage 100 qui comprend deux aubes en deux secteurs d'aubage comprenant chacun une seule aube et accolés l'un à l'autre, tout en conservant le même circuit de circulation de fluide.

En référence au schéma de la figure 5, la séparation physique entre les deux secteurs d'aubage s'effectue sur chaque plateau interne 16 et externe 18, au niveau d'une extrémité de l'étendue circonférentielle inter-aube. On comprend donc que pour au moins un des secteurs d'aubage de l'aubage 9, une première extrémité du plateau externe du secteur d'aubage est accolée à une seconde extrémité du plateau externe d'un secteur d'aubage adjacent, ladite seconde extrémité se situant dans le prolongement d'une aube selon une direction radiale. Cette disposition peut être adoptée sur tous ou quasiment tous les secteurs d'aubage de l'aubage 9. Les secteurs mono-aube ainsi réalisés peuvent être fixés l'un à l'autre par des moyens de fixations connus en soi.

Grâce à une telle réalisation, si une ou plusieurs aubes sont endommagées en vol par exemple par l'impact d'objets étrangers, il suffit de remplacer le ou les secteurs d'aubage correspondant pour reconstituer un aubage 9 sain du turboréacteur. En d'autres termes, uniquement les aubes endommagées doivent être remplacées.

De manière générale, le nombre d'aubes d'un secteur d'aubage pourra être préféré inférieur ou égal à six. En effet, un nombre élevé d'aubes implique un coût plus important du secteur d'aubage, et donc une incidence sur le coût de remplacement d'une aube endommagée puisqu'il faut changer tout le secteur d'aubage correspondant. De plus, si le circuit de dérivation du secteur d'aubage comprend un unique canal qui s'étend dans toutes les aubes du secteur comme décrit plus loin en référence à la figure 6, la perte de charge dans le circuit de dérivation est plus importante que dans le cas de plusieurs circuits de dérivation en parallèle dans le même secteur d'aubage comme sus-décrit en référence à la figure 5. Une perte de charge élevée dans le circuit de dérivation nécessite un différentiel de pression important du fluide entre la conduite d'alimentation et la conduite de récupération afin de maintenir le débit de circulation de fluide souhaité dans les aubes, ce qui implique un échauffement du fluide qui n'est généralement pas souhaitable.

D'un autre côté, le choix de secteurs d'aubage à une seule aube n'est pas forcément optimal, du fait notamment de la masse supplémentaire qu'impliquent les moyens de fixations entre secteurs d'aubage adjacents. De plus, puisqu'il y a dans ce cas autant de circuits de dérivation que d'aubes, le nombre de vannes d'isolement 26 (à supposer qu'il y ait deux vannes par circuit de dérivation) peut devenir pénalisant en termes de coût, masse supplémentaire, surveillance et maintenance.

Pour ces raisons, le nombre d'aubes d'un secteur d'aubage pourra encore être préféré compris entre deux et quatre.

La figure 6 représente un troisième mode de réalisation de secteur d'aubage 200, similaire au secteur d'aubage 10 du premier mode de réalisation à l'exception du circuit de dérivation. Ainsi, les éléments identiques conservent la même référence numérique tandis que les éléments modifiés voient leur signe de référence incrémenté de « 200 ».

Le circuit de dérivation 224 comprend un unique canal 224a qui s'étend dans les deux aubes 12. Le canal 224a s'étend sur toute la hauteur radiale H de chacune des aubes 12, ainsi que dans les plateaux interne et externe 16 et 18, et ce sur sensiblement toute l'étendue circonférentielle Z1 du secteur d'aubage 200. Dans cet exemple, le secteur d'aubage 200 ne comprend qu'un seul circuit de dérivation 224. Plus particulièrement, depuis l'entrée de fluide 25a, le canal 224a s'étend radialement dans une première aube 12, circonférentiellement dans un plateau externe 18 sur toute l'étendue circonférentielle Z1 du secteur d'aubage 200, puis de nouveau radialement dans la première aube 12 vers la sortie de fluide 25b. Dans cet exemple, le canal 224a s'étend également radialement dans la deuxième aube 12.

En vue d'homogénéiser la diffusion thermique du fluide chaud dans les différentes aubes 12, le canal 224a se divise en deux sous-canaux 224aa dans l'aube 12 qui est traversée la première par le canal 224a considérée selon le sens de l'écoulement du fluide au sein du canal 224a de l'amont vers l'aval depuis l'entrée 25a vers la sortie 25b, et ce à chaque traversée de l'aube 12 par le canal 224a. Ainsi, chaque aube 12 présente un nombre identique de passages du canal 224a, dans cet exemple quatre passages.

Les entrées et sorties 25a et 25b du circuit de dérivation 224 sont disposées dans le plateau interne 16, au voisinage d'une extrémité circonférentielle du plateau opposée à l'aube 12 au niveau de laquelle le canal 224a bifurque du plateau 16 à l'aube 12. De cette façon, on utilise le plateau interne 16 sur quasiment toute son étendue circonférentielle pour l'échange thermique entre le fluide du circuit de dérivation 224 et l'air traversant le secteur d'aubage.

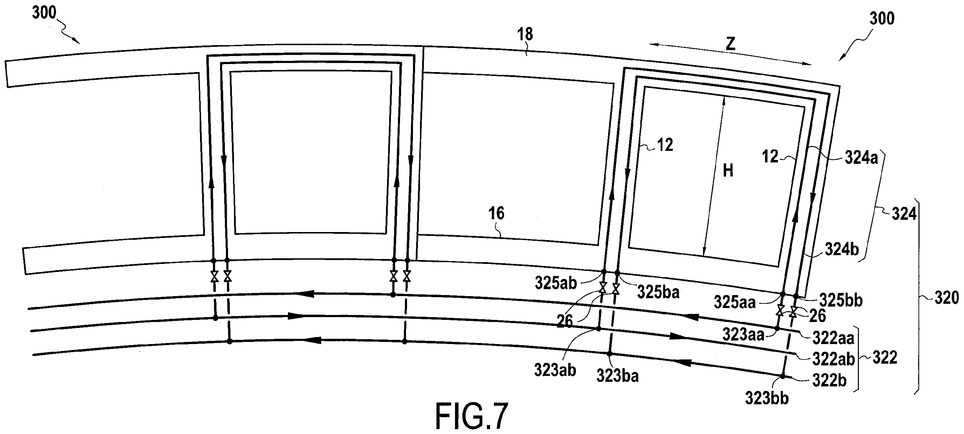

La figure 7 représente un quatrième mode de réalisation de secteur d'aubage 300, similaire au secteur d'aubage 10 du premier mode de réalisation à l'exception du circuit de dérivation et du circuit de distribution. Ainsi, les éléments identiques conservent la même référence numérique tandis que les éléments modifiées voient leur signe de référence incrémenté de « 300 ». On note que la figure 7 représente deux secteurs d'aubage 300 adjacents.

Dans cet exemple, le circuit de distribution 322 comprend une première conduite d'alimentation 322aa, une deuxième conduite de d'alimentation 322ab et une unique conduite de récupération 322b, ces conduites s'étendant circonférentiellement. Comme cela est indiqué par les flèches, le sens d'écoulement du fluide au sein de la première conduite d'alimentation 322aa est opposé au sens d'écoulement du fluide au sein de la deuxième conduite d'alimentation 322ab.

Dans cet exemple, le circuit de dérivation 324, dans chaque secteur d'aubage 300, comprend deux canaux, à savoir un premier canal 324a et un deuxième canal 324b. Le premier canal 324a relie fluidiquement une première entrée 325aa et une première sortie 325ba en s'étendant dans les deux aubes 12 du secteur d'aubage 300, et dans le plateau externe 18. Le deuxième canal 324b relie fluidiquement une deuxième entrée 325ab et une deuxième sortie 325bb en s'étendant dans les deux aubes 12 du secteur d'aubage 300, et dans le plateau externe 18. Ainsi, dans cet exemple, les premier et deuxième canaux 324a et 324b s'étendent sur toute la hauteur radiale H des deux aubes 12 adjacentes du secteur d'aubage 300, et sur toute l'étendue circonférentielle Z du plateau externe 18 entre ces deux aubes adjacentes 12. Bien entendu, les première et deuxième entrées 325aa et 325ab sont respectivement reliées fluidiquement aux piquages de dérivation 323aa et 323ab des première et deuxième conduites d'alimentation 322aa et 322ab tandis que les première et deuxième sorties 325ba et 325bb sont respectivement reliées fluidiquement aux piquages de dérivation 323ba et 323bb de la conduite de récupération 322b.

Par ailleurs, les première et deuxième entrées 325aa et 325ab et les première et deuxième sorties 325ba et 325bb sont disposées de telle sorte que les sens d'écoulement du fluide au sein des premier et deuxième canaux 324a et 324b sont opposés. Dans cet exemple, la première entrée 325aa et la deuxième sortie 325bb sont disposée, selon la direction circonférentielle, au voisinage d'une même aube parmi les deux aubes 12 du secteur d'aubage 300 tandis que la première sortie 325ba et la deuxième entrée 325ab sont disposées, selon la direction circonférentielle, au voisinage de l'autre aube parmi les deux aubes 12 du secteur d'aubage 300.

Les sens d'écoulement du fluide d'une part au sein des première et deuxième conduites d'alimentation 322aa et 322ab, et d'autre part au sein des premier et deuxième canaux 324a et 324b permettent une grande homogénéité de température d'une part au sein de chaque secteur d'aubage 300, et d'autre part entre chacun des secteurs d'aubage 300 formant l'aubage 9 du turboréacteur 1. Pour obtenir une telle homogénéité de température, il est avantageux que les première et deuxième conduites d'alimentation 322aa et 322ab soient ménagées parallèles l'une à l'autre et suffisamment proches l'une de l'autre pour permettre un échange thermique entre le fluide circulant dans les deux conduites. Cette disposition est d'autant plus avantageuse dans une configuration où dans chaque conduite d'alimentation, le fluide a tendance à se refroidir au fur et à mesure de son parcours, ce qui est particulièrement le cas lorsque les première et deuxième conduites d'alimentation sont disposées dans le plateau interne 16 de façon à réaliser un échange thermique avec l'air de la veine. Il est en outre préférable que les températures de fluide en entrée respectivement des première et deuxième conduites d'alimentation soient sensiblement les mêmes. L'échange thermique mutuel entre le fluide circulant dans les deux conduites selon des sens de circulation opposés permet de moyenner les températures du fluide dans ces deux conduites, et d'obtenir par conséquent une température de fluide relativement homogène entre les entrées respectives 325aa et 325ab des circuits de dérivation 324 des différents secteurs d'aubage 300.

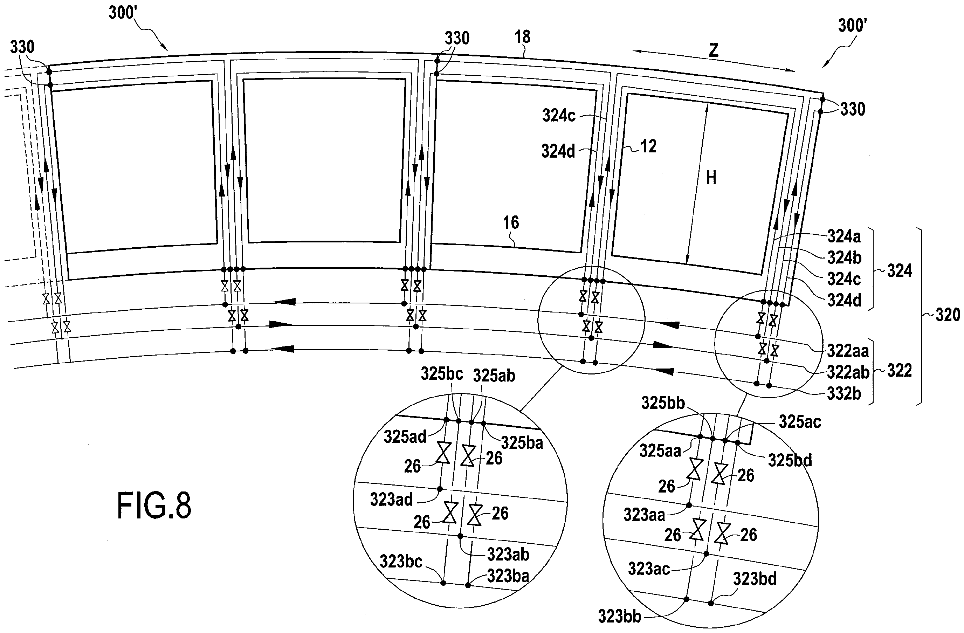

Selon une variante représentée sur la figure 8, pour encore améliorer l'homogénéité de la température de chaque secteur d'aubage 300', des troisième et quatrième canaux 324c et 324d s'étendent dans deux secteurs d'aubage 300' adjacents. On comprend donc que chaque secteur d'aubage 300' comprend deux portions distinctes de troisième canal et deux portions distinctes de quatrième canal, les deux portions de troisième canal et les deux portions de quatrième canal appartement respectivement à deux troisièmes canaux et deux quatrièmes canaux distincts.

Ces troisième et quatrième canaux 324c et 324d s'étendent, dans chacun des secteurs d'aubage 300' sur toute la hauteur radiale H d'une aube 12. De plus, ces troisième et quatrième canaux 324c et 324d s'étendent sur toute l'étendue circonférentielle du plateau externe 18 d'un des deux secteurs d'aubage 300' adjacents entre les deux aubes 12 adjacentes appartenant respectivement aux deux secteurs d'aubages 300' distinct adjacents. Ainsi, les troisième et quatrième canaux 324c et 324d comprennent des raccords 330 pour assurer leur continuité fluidique entre deux secteurs d'aubage 300' adjacents. Ces troisième et quatrième canaux 324c et 324d relient fluidiquement respectivement une troisième entrée 324ac avec une troisième sortie 325bc et une quatrième entrée 324ad avec une quatrième sortie 325bd. Les troisième et quatrième entrées 325ac et 325ad et les troisième et quatrième sorties 325bc et 325bd sont disposées de telle sorte que les sens d'écoulement du fluide au sein des troisième et quatrième canaux 324c et 324d sont opposés. Bien entendu, les troisième et quatrièmes entrées 325ac et 325ad sont respectivement reliées fluidiquement aux piquages de dérivation 323ac et 323ac des première et deuxième conduites d'alimentation 322aa et 322ab tandis que les troisième et quatrième sorties 325bc et 325bd sont respectivement reliées fluidiquement aux piquages de dérivation 323bc et 323bd de la conduite de récupération 322b.

Bien entendu selon une autre variante non représentée les première et deuxième conduites d'alimentation 322aa et 322ab et/ou la conduite de récupération 322b sont ménagées au moins en partie dans les plateaux internes 16 des secteurs d'aubage 300 ou 300', de manière similaire à la variante du premier mode de réalisation de la figure 3.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif. Notamment, la configuration des canaux sont combinables et transposable d'un mode de réalisation / exemple / variante à un autre.

## Revendications

1. Turbomachine comprenant au moins un secteur d'aubage de stator (10, 100, 200, 300) et un circuit de distribution de fluide (22, 322), le secteur d'aubage de stator comprenant au moins une aube (12), une entrée de fluide (25a, 325aa), une sortie de fluide (25b, 325ba) et un canal (24a, 124a, 224a, 324a) reliant fluidiquement l'entrée de fluide (25a, 325aa) et la sortie de fluide (25b, 325ba) en s'étendant au moins en partie dans l'aube (12), l'aube et le canal étant adaptés pour permettre, lorsque la turbomachine fonctionne, un échange thermique entre un fluide chaud traversant le canal et un flux d'air froid traversant le secteur d'aubage de stator, le circuit de distribution de fluide (22, 322) présentant au moins une conduite d'alimentation (22a, 322aa) et au moins une conduite de récupération (22b, 322b) distincte de la conduite d'alimentation, l'entrée de fluide (25a, 325aa) étant reliée fluidiquement à un piquage de dérivation (23a, 323aa) de la conduite d'alimentation (22a, 322aa) tandis que la sortie de fluide (25b, 325ba) est reliée fluidiquement à un piquage de dérivation (23b, 323ba) de la conduite de récupération (22b, 322b), dans laquelle le secteur d'aubage de stator (100, 200, 300) comprend un plateau interne (16) relié à l'extrémité interne de l'aube (12) et un plateau externe (18) relié à l'extrémité externe de l'aube (12), l'entrée de fluide (25a, 325aa) et la sortie de fluide (25b, 325ba) étant toutes les deux ménagées dans un plateau parmi le plateau interne (16) et le plateau externe (18) tandis que le canal (124a, 224a, 324a) s'étend en partie dans l'autre plateau parmi le plateau interne (16) et le plateau externe (18).

2. Turbomachine selon la revendication 1, dans laquelle, depuis l'entrée de fluide (25a), le canal (224a) s'étend radialement dans une première aube (12), circonférentiellement dans un plateau (18) sur toute l'étendue circonférentielle (Z1) du secteur d'aubage (200), puis de nouveau radialement dans la première aube (12) vers la sortie de fluide (25b).

3. Turbomachine selon la revendication 1, dans laquelle le secteur d'aubage de stator (100) comprend plusieurs aubes (12), le canal (124a) s'étend radialement, depuis l'entrée de fluide (25a), dans une première aube (12), circonférentiellement dans un plateau (18) sur toute l'étendue circonférentielle inter-aube (Z), puis de nouveau radialement dans la première aube (12) vers la sortie de fluide (25b).

4. Turbomachine selon l'une quelconque des revendications 1 à 3, dans laquelle l'entrée de fluide (25a, 325aa) et la sortie de fluide (25b, 325ba) sont ménagées dans le plateau interne (16).

5. Turbomachine selon l'une quelconque des revendications 1 à 4, dans laquelle le secteur d'aubage de stator (200, 300) comprend plusieurs aubes (12), le canal (224a, 324a) s'étendant dans au moins deux des aubes (12).

6. Turbomachine selon la revendication 5, dans lequel le secteur d'aubage de stator (200) comprend un plateau interne (16) relié à l'extrémité interne de chacune des aubes (12) et un plateau externe (18) relié à l'extrémité externe de chacune des aubes (12), le canal (224a) s'étendant dans le plateau interne (16) et dans le plateau externe (18).

7. Turbomachine selon l'une quelconque des revendications 1 à 6, dans lequel le secteur d'aubage (10, 100) comprend plusieurs aubes (12), au moins deux aubes (12) comprenant chacune un canal (24a, 124a), les aubes et les canaux étant adaptés pour permettre, lorsque la turbomachine fonctionne, un échange thermique entre un fluide chaud traversant le canal et un flux d'air froid traversant le secteur d'aubage de stator, le canal (24a, 124a) d'une aube (12) étant distinct du canal (24a, 124a) de l'autre aube (12), le secteur d'aubage (10, 100) comprenant autant d'entrées de fluide (25a) et de sorties de fluide (25b) que de canaux (24a, 124a), chaque canal (24a, 124a) étant respectivement relié fluidiquement à une entrée de fluide (25a) et une sortie de fluide (25b) distinctes de l'entrée de fluide (25a) et de la sortie de fluide (25b) de l'autre canal (24a, 124a).

8. Turbomachine selon l'une quelconque des revendications 1 à 7, comprenant au moins deux secteurs d'aubage de stator (10, 100, 200, 300), chaque secteur d'aubage de stator comprenant au moins une aube (12), une entrée de fluide (25a, 325aa), une sortie de fluide (25b, 325ba) et un canal (24a, 124a, 224a, 324a) reliant fluidiquement l'entrée de fluide (25a, 325aa) et la sortie de fluide (25b, 325ba) en s'étendant au moins en partie dans l'aube (12), l'aube et le canal de chacun des secteurs d'aubage étant adaptés pour permettre, lorsque la turbomachine fonctionne, un échange thermique entre un fluide chaud traversant chaque canal et un flux d'air froid traversant le secteur d'aubage de stator, l'entrée de fluide (25a, 325aa) de chaque secteur d'aubage de stator étant reliée fluidiquement à un piquage de dérivation (23a, 323aa) de la conduite d'alimentation (22a, 322aa) tandis que la sortie de fluide (25b, 325ba) de chaque secteur d'aubage est reliée fluidiquement à un piquage de dérivation (23b, 323ba) de la conduite de récupération (22b, 322b).

9. Turbomachine selon l'une quelconque des revendications 1 à 8, dans laquelle la conduite d'alimentation forme une première conduite d'alimentation (322aa) tandis que le canal, l'entrée de fluide et la sortie de fluide forment respectivement un premier canal (324a), une première entrée de fluide (325aa) et une première sortie de fluide (325ba), le circuit de distribution (322) comprenant une deuxième conduite d'alimentation (322ab), le sens de circulation du fluide dans la première conduite d'alimentation (322aa) étant opposé au sens de circulation du fluide dans la deuxième conduite d'alimentation (322ab) tandis que le secteur d'aubage de stator (300) comprend une deuxième entrée de fluide (325ab), une deuxième sortie de fluide (325bb) et un deuxième canal (324b) reliant fluidiquement la deuxième entrée de fluide (325ab) et la deuxième sortie de fluide (325bb) en s'étendant au moins en partie dans l'aube (12), l'aube et le deuxième canal étant adaptés pour permettre, lorsque la turbomachine fonctionne, un échange thermique entre un fluide chaud traversant le deuxième canal et un flux d'air froid traversant le secteur d'aubage de stator, la deuxième entrée de fluide (325ab) étant reliée fluidiquement à un piquage de dérivation (323ab) de la deuxième conduite d'alimentation (322ab) tandis que la deuxième sortie de fluide (325bb) est reliée fluidiquement à un piquage de dérivation (323bb) de la conduite de récupération (322b).

10. Turbomachine selon l'une quelconque des revendications 1 à 9, dans laquelle le secteur d'aubage de stator (10') comprend un plateau interne (16) relié à l'extrémité interne de l'aube (12) et un plateau externe (18) relié à l'extrémité externe de l'aube (12), le circuit de distribution de fluide (22) étant au moins en partie ménagé dans un plateau parmi le plateau interne (16) et le plateau externe (18).

11. Turbomachine selon l'une quelconque des revendications 1 à 10, dans laquelle le piquage de dérivation (25a, 325aa) de la conduite d'alimentation (22a, 322aa) et/ou le piquage de dérivation (25b, 325bb) de la conduite de récupération (22b, 322b) est/sont équipé(s) d'une vanne d'isolement (26).

12. Turbomachine selon l'une quelconque des revendications 1 à 11, dans laquelle le fluide est un liquide, notamment de l'huile.

13. Turbomachine selon l'une quelconque des revendications 1 à 11, dans laquelle le fluide est un fluide caloporteur, et dans laquelle le circuit de distribution comprend un échangeur de chaleur (28) configuré pour échanger de la chaleur entre le fluide caloporteur et un autre fluide, notamment de l'huile.

14. Turbomachine selon l'une quelconque des revendications 1 à 13, dans laquelle le nombre d'aubes (12) d'un secteur d'aubage de stator (100) est compris entre deux et quatre.

## Patentansprüche

1. Turbomaschine, umfassend zumindest einen Statorschaufelsektor (10, 100, 200, 300) und einen Fluid-Verteilungskreis (22, 322), wobei der Statorschaufelsektor zumindest eine Schaufel (12), einen Fluideingang (25a, 325aa), einen Fluidausgang (25b, 325ba) und einen Kanal (24a, 124a, 224a, 324a) umfasst, der den Fluideingang (25a, 325aa) und den Fluidausgang (25b, 325ba) in Fluidverbindung setzt, indem er sich zumindest zum Teil in der Schaufel (12) erstreckt, wobei die Schaufel und der Kanal dazu geeignet sind, wenn die Turbomaschine in Betrieb ist, einen Wärmeaustausch zwischen einem heißen Fluid, das den Kanal durchläuft, und einem kalten Luftstrom, der den Statorschaufelsektor durchläuft, zu erlauben, wobei der Fluid-Verteilungskreis (22, 322) zumindest eine Zufuhrleitung (22a, 322aa) und zumindest eine Rückgewinnungsleitung (22b, 322b), die von der Zufuhrleitung getrennt ist, aufweist, wobei der Fluideingang (25a, 325aa) in Fluidverbindung mit einer Ableitungsabzweigung (23a, 323aa) der Zufuhrleitung (22a, 322aa) steht, während der Fluidausgang (25b, 325ba) in Fluidverbindung mit einer Ableitungsabzweigung (23b, 323ba) der Rückgewinnungsleitung (22b, 322b) steht, wobei der Statorschaufelsektor (100, 200, 300) ein inneres Plateau (16), das mit dem inneren Ende der Schaufel (12) verbunden ist, und ein äußeres Plateau (18) umfasst, das mit dem äußeren Ende der Schaufel (12) verbunden ist, wobei der Fluideingang (25a, 325aa) und der Fluidausgang (25b, 325ba) beide in einem Plateau von dem inneren Plateau (16) und dem äußeren Plateau (18) angeordnet sind, während der Kanal (124a, 224a, 324a) sich zum Teil in dem anderen Plateau von dem inneren Plateau (16) und dem äußeren Plateau (18) erstreckt.

2. Turbomaschine nach Anspruch 1, wobei sich der Kanal (224a) ab dem Fluideingang (25a) radial in einer ersten Schaufel (12) in Umfangsrichtung in einem Plateau (18) über die gesamte Umfangserstreckung (Z1) des Schaufelsektors (200) erstreckt, dann erneut radial in der ersten Schaufel (12) zu dem Fluidausgang (25b) hin.

3. Turbomaschine nach Anspruch 1, wobei der Statorschaufelsektor (100) mehrere Schaufeln (12) umfasst, der Kanal (124a) sich radial ab dem Fluideingang (25a) in einer ersten Schaufel (12) in Umfangsrichtung in einem Plateau (18) über die gesamte Umfangserstreckung (Z) zwischen Schaufeln erstreckt, dann erneut radial in der ersten Schaufel (12) zu dem Fluidausgang (25b) hin.

4. Turbomaschine nach einem der Ansprüche 1 bis 3, wobei der Fluideingang (25a, 325aa) und der Fluidausgang (25b, 325ba) in dem inneren Plateau (16) angeordnet sind.

5. Turbomaschine nach einem der Ansprüche 1 bis 4, wobei der Statorschaufelsektor (200, 300) mehrere Schaufeln (12) umfasst und sich der Kanal (224a, 324a) in zumindest zwei der Schaufeln (12) erstreckt.

6. Turbomaschine nach Anspruch 5, wobei der Statorschaufelsektor (200) ein inneres Plateau (16), das mit dem inneren Ende einer jeden der Schaufeln (12) verbunden ist, und ein äußeres Plateau (18) umfasst, das mit dem äußeren Ende einer jeden der Schaufeln (12) verbunden ist, wobei sich der Kanal (224a) in dem inneren Plateau (16) und in dem äußeren Plateau (18) erstreckt.

7. Turbomaschine nach einem der Ansprüche 1 bis 6, wobei der Schaufelsektor (10, 100) mehrere Schaufeln (12) umfasst, zumindest zwei Schaufeln (12) jeweils einen Kanal (24a, 124a) umfassen und die Schaufeln und die Kanäle dazu geeignet sind, wenn die Turbomaschine in Betrieb ist, einen Wärmeaustausch zwischen einem heißen Fluid, das den Kanal durchläuft, und einem kalten Luftstrom, der den Statorschaufelsektor durchläuft, zu erlauben, wobei der Kanal (24a, 124a) einer Schaufel (12) von dem Kanal (24a, 124a) der anderen Schaufel (12) getrennt ist, wobei der Schaufelsektor (10, 100) gleich viele Fluideingänge (25a) und Fluidausgänge (25b) wie Kanäle (24a, 124a) umfasst und jeder Kanal (24a, 124a) jeweils in Fluidverbindung mit einem Fluideingang (25a) und einem Fluidausgang (25b) steht, die von dem Fluideingang (25a) und dem Fluidausgang (25b) des anderen Kanals (24a, 124a) getrennt sind.

8. Turbomaschine nach einem der Ansprüche 1 bis 7, umfassend zumindest zwei Statorschaufelsektoren (10, 100, 200, 300), wobei jeder Statorschaufelsektor zumindest eine Schaufel (12), einen Fluideingang (25a, 325aa), einen Fluidausgang (25b, 325ba) und einen Kanal (24a, 124a, 224a, 324a) umfasst, der den Fluideingang (25a, 325aa) und den Fluidausgang (25b, 325ba) in Fluidverbindung setzt, indem er sich zumindest zum Teil in der Schaufel (12) erstreckt, wobei die Schaufel und der Kanal jedes Schaufelsektors dazu geeignet sind, wenn die Turbomaschine in Betrieb ist, einen Wärmeaustausch zwischen einem heißen Fluid, das jeden Kanal durchläuft, und einem kalten Luftstrom, der den Statorschaufelsektor durchläuft, zu erlauben, wobei der Fluideingang (25a, 325aa) eines jeden Statorschaufelsektors in Fluidverbindung mit einer Ableitungsabzweigung (23a, 323aa) der Zufuhrleitung (22a, 322aa) steht, während der Fluidausgang (25b, 325ba) eines jeden Schaufelsektors in Fluidverbindung mit einer Ableitungsabzweigung (23b, 323ba) der Rückgewinnungsleitung (22b, 322b) steht.

9. Turbomaschine nach einem der Ansprüche 1 bis 8, wobei die Zufuhrleitung eine erste Zufuhrleitung (322aa) sowie den Kanal bildet, der Fluideingang und der Fluidausgang jeweils einen ersten Kanal (324a), einen ersten Fluideingang (325aa) und einen ersten Fluidausgang (325ba) bilden und der Verteilungskreis (322) eine zweite Zufuhrleitung (322ab) umfasst, wobei die Umwälzrichtung des Fluids in der ersten Zufuhrleitung (322aa) der Umwälzrichtung des Fluids in der zweiten Zufuhrleitung (322ab) entgegengesetzt ist, während der Statorschaufelsektor (300) einen zweiten Fluideingang (325ab), einen zweiten Fluidausgang (325bb) und einen zweiten Kanal (324b) umfasst, der den zweiten Fluideingang (325ab) und den zweiten Fluidausgang (325bb) in Fluidverbindung setzt, indem er sich zumindest zum Teil in der Schaufel (12) erstreckt, wobei die Schaufel und der zweite Kanal dazu geeignet sind, wenn die Turbomaschine in Betrieb ist, einen Wärmeaustausch zwischen einem heißen Fluid, das den zweiten Kanal durchläuft, und einem kalten Luftstrom, der den Statorschaufelsektor durchläuft, zu erlauben, wobei der zweite Fluideingang (325ab) in Fluidverbindung mit einer Ableitungsabzweigung (323ab) der zweiten Zufuhrleitung (322ab) steht, während der zweite Fluidausgang (325bb) in Fluidverbindung mit einer Ableitungsabzweigung (323bb) der Rückgewinnungsleitung (322b) steht.

10. Turbomaschine nach einem der Ansprüche 1 bis 9, wobei der Statorschaufelsektor (10') ein inneres Plateau (16), das mit dem inneren Ende der Schaufel (12) verbunden ist, und ein äußeres Plateau (18) umfasst, das mit dem äußeren Ende der Schaufel (12) verbunden ist, wobei der Fluid-Verteilungskreis (22) zumindest zum Teil in einem Plateau von dem inneren Plateau (16) und dem äußeren Plateau (18) angeordnet ist.

11. Turbomaschine nach einem der Ansprüche 1 bis 10, wobei die Ableitungsabzweigung (25a, 325aa) der Zufuhrleitung (22a, 322aa) und/oder die Ableitungsabzweigung (25b, 325bb) der Rückgewinnungsleitung (22b, 322b) mit einem Isolierventil (26) ausgestattet ist/sind.

12. Turbomaschine nach einem der Ansprüche 1 bis 11, wobei das Fluid eine Flüssigkeit ist, insbesondere Öl.

13. Turbomaschine nach einem der Ansprüche 1 bis 11, wobei das Fluid ein Kühlmittelfluid ist, und wobei der Verteilungskreis einen Wärmetauscher (28) umfasst, der dazu ausgestaltet ist, Wärme zwischen dem Kühlmittelfluid und einem anderen Fluid, insbesondere Öl, auszutauschen.

14. Turbomaschine nach einem der Ansprüche 1 bis 13, wobei die Anzahl der Schaufeln (12) eines Statorschaufelsektors (100) zwischen zwei und vier beträgt.

## Claims

1. A turbomachine including at least one stator vane sector (10, 100, 200, 300) and a fluid distribution circuit (22, 322), the stator vane sector comprising at least one vane (12), a fluid inlet (25a, 325aa), a fluid outlet (25b, 325ba), and a channel (24a, 124a, 224a, 324a) providing fluid flow connection between the fluid inlet (25a, 325aa) and the fluid outlet (25b, 325ba) while extending at least in part in the vane (12), the vane and the channel being adapted, while the turbomachine is in operation, to enable heat to be exchanged between a hot fluid passing through the channel and a stream of cold air passing through the stator vane sector, the fluid distribution circuit (22, 322) presenting at least one feed pipe (22a, 322aa) and at least one recovery pipe (22b, 322b) distinct from the feed pipe, the fluid inlet (25a, 325aa) being in fluid flow connection with a branch tapping (23a, 323aa) of the feed pipe (22a, 322aa) while the fluid outlet (25b, 325ba) is in fluid flow connection with a branch tapping (23b, 322ba) of the recovery pipe (22b, 322b), wherein the stator vane sector (100, 200, 300) comprises an inner plate (16) connected to the inner end of the vane (12) and an outer plate (18) connected to the outer end of the vane (12), the fluid inlet (25a, 325aa) and the fluid outlet (25b, 325ba) both being arranged in one of the plates selected from the inner plate (16) and the outer plate (18), while the channel (124a, 224a, 324a) extends in part in the other plate from among the inner plate (16) and the outer plate (18).

2. A turbomachine according to claim 1, wherein, from the fluid inlet (25a), the channel (224a) extends radially in a first vane (12), circumferentially in a plate (18) over the entire circumferential extent (Z1) of the vane sector (200), and then once more radially in the first vane (12) towards the fluid outlet (25b).

3. A turbomachine according to claim 1, wherein the stator vane sector (100) has a plurality of vanes (12), the channel (124a) extending radially from the fluid inlet (25a) in a first vane (12), circumferentially in a plate (18) over the entire circumferential extent (Z) between vanes, then once more radially in the first vane (12) towards the fluid outlet (25b).

4. A turbomachine according to any one of claims 1 to 3, wherein the fluid inlet (25a, 325aa) and the fluid outlet (25b, 325ba) are arranged in the inner plate (16).

5. A turbomachine according to any one of claims 1 to 4, wherein the stator vane sector (200, 300) has a plurality of vanes (12), the channel (224a, 324a) extending in at least two of the vanes (12).

6. A turbomachine according to claim 5, wherein the stator vane sector (200) has an inner plate (16) connected to the inner end of each of the vanes (12) and an outer plate (18) connected to the outer end of each of the vanes (12), the channel (224a) extending in the inner plate (16) and in the outer plate (18).

7. A turbomachine according to any one of claims 1 to 6, wherein the vane sector (10, 100) has a plurality of vanes (12), at least two vanes (12) each having a respective channel (24a, 124a), the vanes and the channels being adapted, when the turbomachine is in operation, to enable heat to be exchanged between a hot fluid flowing through the channel and a cold air stream flowing through the stator vane sector, the channel (24a, 124a) of one vane (12) being distinct from the channel (24a, 124a) of the other vane (12), the vane sector (10, 100) having as many fluid inlets (25a) and fluid outlets (25b) as it has channels (24a, 124a), each channel (24a, 124a) being respectively in fluid flow connection with a fluid inlet (25a) and with a fluid outlet (25b) that are distinct from the fluid inlet (25a) and the fluid outlet (25b) of the other channel (24a, 124a).

8. A turbomachine according to any one of claims 1 to 7, having at least two stator vane sectors (10, 100, 200, 300), each stator vane sector having at least one vane (12), a fluid inlet (25a, 325aa), a fluid outlet (25b, 325ba), and a channel (24a, 124a, 224a, 324a) providing fluid flow connection between the fluid inlet (25a, 325aa) and the fluid outlet (25b, 325ba) while extending at least in part in the vane (12), the vane and the channel of each of the vane sectors being adapted, when the turbomachine is in operation, to enable heat to be exchanged between a hot fluid flowing through each channel and a cold air stream flowing through the stator vane sector, the fluid inlet (25a, 325aa) of each stator vane sector being in fluid flow connection with a branch tapping (23a, 323aa) of the feed pipe (22a, 322aa), while the fluid outlet (25b, 325ba) of each vane sector is in fluid flow connection with a branch tapping (23b, 323ba) of the recovery pipe (22b, 322b).

9. A turbomachine according to any one of claims 1 to 8, wherein the feed pipe forms a first feed pipe (322aa) while the channel, the fluid inlet, and the fluid outlet form respectively a first channel (324a), a first fluid inlet (325aa), and a first fluid outlet (325ba), the distribution circuit (322) comprising a second feed pipe (322ab), the flow direction of the fluid in the first feed pipe (322aa) being opposite to the flow direction of the fluid in the second feed pipe (322ab), while the stator vane sector (300) includes a second fluid inlet (325ab), a second fluid outlet (325bb), and a second channel (324b) providing fluid flow connection between the second fluid inlet (325ab) and the second fluid outlet (325bb) while extending at least in part in the vane (12), the vane and the second channel being adapted, when the turbomachine is in operation, to allow heat to be exchanged between a hot fluid flowing through the second channel and a cold air stream flowing through the stator vane sector, the second fluid inlet (325ab) being in fluid flow connection with a branch tapping (323ab) of the second feed pipe (322ab), while the second fluid flow outlet (325bb) is in fluid flow connection with a branch tapping (323bb) of the recovery pipe (322b).

10. A turbomachine according to any one of claims 1 to 9, wherein the stator vane sector (10') has an inner plate (16) connected to the inner end of the vane (12) and an outer plate (18) connected to the outer end of the vane (12), the fluid distribution circuit (22) being arranged at least in part in one of the plates from among the inner plate (16) and the outer plate (18).

11. A turbomachine according to any one of claims 1 to 10, wherein the branch tapping (25a, 325aa) of the feed pipe (22a, 322aa) and/or the branch tapping (25b, 325bb) of the recovery pipe (22b, 322b) is/are provided with an isolating valve (26).

12. A turbomachine according to any one of claims 1 to 11, wherein the fluid is a liquid, in particular oil.

13. A turbomachine according to any one of claims 1 to 11, wherein the fluid is a heat transfer fluid, and wherein the distribution circuit includes a heat exchanger (28) configured to exchange heat between the heat transfer fluid and another fluid, in particular oil.

14. A turbomachine according to any one of claims 1 to 13, wherein the number of vanes (12) of a stator vane sector (100) lies in the range two to four.
